# EUROPÄISCHE PATENTSCHRIFT

(11) **EP 4 396 807 B1**
(45) Veröffentlichungstag und Bekanntmachung des Hinweises auf die Patenterteilung: **09.12.2026**
(21) Anmeldenummer: 22765403.5
(22) Anmeldetag: 18.08.2022
(51) Int. Cl.: G09G 3/00, G02B 27/01, G06F 3/01, G08G 1/16

(54) **HEAD-UP-DISPLAY MIT REDUZIERTER VERDECKUNG**
HEAD-UP-DISPLAY REDUCING CONCEALMENT
AFFICHAGE TÊTE HAUTE RÉDUISANT L'OCCULTATION

(30) Priorität: 01.09.2021 DE 102021209616; 26.04.2022 DE 102022204033
(43) Veröffentlichungstag der Anmeldung: 10.07.2024
(73) Patentinhaber: AUMOVIO Germany GmbH, 60488 Frankfurt am Main (DE)
(72) Erfinder: PALM, Nils, 30175 Hannover (DE)
(74) Vertreter: Aumovio Corporation
(86) Internationale Anmeldenummer: PCT/DE2022/200189
(87) Internationale Veröffentlichungsnummer: WO 2023/030593

(56) Entgegenhaltungen:
- US-A1- 2013 265 232
- US-A1- 2017 269 370
- US-A1- 2020 019 782
- US-A1- 2020 065 979

## Beschreibung

Die vorliegende Erfindung betrifft ein Verfahren, ein Computerprogramm mit Instruktionen und eine Vorrichtung zum Reduzieren von Verdeckungen durch ein virtuelles Bild eines Head-Up-Displays eines Fortbewegungsmittels. Die Erfindung betrifft zudem ein Head-Up-Display für ein Fortbewegungsmittel, in dem ein solches Verfahren oder eine solche Vorrichtung eingesetzt wird.

Unter einem Head-Up-Display, auch als HUD bezeichnet, wird ein Anzeigesystem verstanden, bei dem der Betrachter seine Blickrichtung beibehalten kann, da die darzustellenden Inhalte in sein Sichtfeld eingeblendet werden. Während derartige Systeme aufgrund ihrer Komplexität und Kosten ursprünglich vorwiegend im Bereich der Luftfahrt Verwendung fanden, werden sie inzwischen auch im Automobilbereich in Großserie verbaut.

Head-Up-Displays bestehen im Allgemeinen aus einem Bildgenerator, einer Optikeinheit und einer Spiegeleinheit. Der Bildgenerator erzeugt das Bild. Die Optikeinheit leitet das Bild auf die Spiegeleinheit. Der Bildgenerator wird oft auch als bildgebende Einheit oder PGU (Picture Generating Unit) bezeichnet. Die Spiegeleinheit ist eine teilweise spiegelnde, lichtdurchlässige Scheibe. Der Betrachter sieht also die vom Bildgenerator dargestellten Inhalte als virtuelles Bild und gleichzeitig die reale Welt hinter der Scheibe. Als Spiegeleinheit dient im Automobilbereich oftmals die Windschutzscheibe, deren gekrümmte Form bei der Darstellung berücksichtigt werden muss. Durch das Zusammenwirken von Optikeinheit und Spiegeleinheit ist das virtuelle Bild eine vergrößerte Darstellung des vom Bildgenerator erzeugten Bildes.

Für Head-Up-Displays wird derzeit üblicherweise eine Flüssigkristallanzeige (LCD: Liquid Crystal Display) mit einer Hinterleuchtung für die bildgebende Einheit genutzt. Auch Anzeigen basierend auf OLED-Technologie (OLED: Organic Light Emitting Diode; organische Leuchtdiode) und DMD-Technologie (Digital Micromirror Device; digitales Mikrospiegel-Bauteil) finden Verwendung.

Vor diesem Hintergrund beschreibt DE 10 2015 215 180 A1 ein Head-Up-Display für ein Fahrzeug. Das Head-Up-Display umfasst eine Anzeigevorrichtung zum Ausstrahlen von Licht mit einer Bilderzeugungseinheit, sowie eine Bildsteuereinheit zum Ansteuern der Bilderzeugungseinheit. Dabei wird in Abhängigkeit von der Blickrichtung eines Nutzers in Bereichen der Anzeigevorrichtung eine reduzierte Helligkeit eingestellt. Dies ermöglicht eine Reduzierung des Energieaufwands bei der Bilderzeugung. Es verhindert aber nicht, dass bei niedriger Umgebungshelligkeit eine Blendung des Nutzers erfolgt, wenn die nicht in ihrer Helligkeit reduzierten Bereiche der Anzeigevorrichtung zu hell eingestellt sind.

Bei großen, hellen Head-Up-Displays, die einen großen Bereich des Sichtfelds des Fahrers überdecken, ergibt sich neben dem Problem der Blendung das Problem der Verdeckung. Es muss vermieden werden, dass relevante Objekte, wie z.B. Radfahrer, Fußgänger, Tiere oder ein auf die Straße rollender Fußball, durch einen hellen Bereich im virtuellen Bild des Head-Up-Displays verdeckt und deshalb durch den Fahrer nicht wahrgenommen werden können.

Ein genereller Ansatz zur Lösung dieser Problematik besteht darin, dass größere, vollflächig helle Bereiche auf dem LCD-Display vermieden werden und das virtuelle Bild eher aus dünnen Strichen aufbaut wird, anstatt gefüllte Flächen zu verwenden.

Zur Überwachung, ob helle Bereiche zu einer Verdeckung führen können, kann das virtuelle Bild in kleine Rechtecke zerlegt werden, sogenannte Kacheln, die jeweils auf ihre Transparenz überprüft werden. Die Transparenz dient dabei als Maß für die Verdeckungsfläche der Kachel. Bei der Überprüfung ist zu beachten, dass die Transparenz nur ein Viertel so groß sein darf, wie die maximale zulässige Verdeckungsfläche. Dies berücksichtigt, dass sich der flächig helle Bereich im ungünstigsten Fall auf vier Kachel aufteilen könnte.

Aus US 2013/265232 A1 ist ein Verfahren zum Reduzieren von Verdeckungen durch ein virtuelles Bild eines Head-Up-Displays eines Fortbewegungsmittels bekannt mit den Schritten:
- Unterteilen eines anzuzeigenden Bildes in eine Mehrzahl von Teilflächen;
- Bestimmen von Verdeckungsflächen für die einzelnen Teilflächen; und
- Ausgeben eines Warnsignals, wenn für zumindest eine der Teilflächen die bestimmte Verdeckungsfläche eine zulässige Größe überschreitet.

Es ist eine Aufgabe der Erfindung, verbesserte Lösungen für die Reduzierung von Verdeckungen durch ein virtuelles Bild eines Head-Up-Displays bereitzustellen. Diese Aufgabe wird durch ein Verfahren mit den Merkmalen des Anspruchs 1, durch ein Computerprogramm mit Instruktionen mit den Merkmalen des Anspruchs 8 und durch eine Vorrichtung mit den Merkmalen des Anspruchs 19 gelöst. Bevorzugte Ausgestaltungen der Erfindung sind Gegenstand der abhängigen Ansprüche.

Gemäß einem ersten Aspekt der Erfindung umfasst ein Verfahren zum Reduzieren von Verdeckungen durch ein virtuelles Bild eines Head-Up-Displays eines Fortbewegungsmittels die Schritte:
- Bestimmen eines Horizonts;
- Unterteilen eines anzuzeigenden Bildes in eine Mehrzahl von Teilflächen, wobei die Teilflächen rechteckig sind und ihre vertikale Ausdehnung über die Fläche des anzuzeigenden Bildes variiert;
- Bestimmen von Verdeckungsflächen für die einzelnen Teilflächen; und
- Ausgeben eines Warnsignals, wenn für zumindest eine der Teilflächen die bestimmte Verdeckungsfläche eine zulässige Größe überschreitet.

Gemäß einem weiteren Aspekt der Erfindung umfasst ein Computerprogramm Instruktionen, die bei Ausführung durch einen Computer den Computer zur Ausführung der folgenden Schritte zum Reduzieren von Verdeckungen durch ein virtuelles Bild eines Head-Up-Displays eines Fortbewegungsmittels veranlassen:
- Unterteilen eines anzuzeigenden Bildes in eine Mehrzahl von Teilflächen, wobei die Teilflächen rechteckig sind und ihre vertikale Ausdehnung über die Fläche des anzuzeigenden Bildes variiert;
- Bestimmen von Verdeckungsflächen für die einzelnen Teilflächen; und
- Ausgeben eines Warnsignals, wenn für zumindest eine der Teilflächen die bestimmte Verdeckungsfläche eine zulässige Größe überschreitet.

Der Begriff Computer ist dabei breit zu verstehen. Insbesondere umfasst er auch Steuergeräte, Controller, eingebettete Systeme und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist eine Vorrichtung zum Reduzieren von Verdeckungen durch ein virtuelles Bild eines Head-Up-Displays eines Fortbewegungsmittels auf:
- ein Auswertemodul zum Bestimmen eines Horizonts;
- ein Unterteilungsmodul zum Unterteilen eines anzuzeigenden Bildes in eine Mehrzahl von Teilflächen, wobei die Teilflächen rechteckig sind und ihre vertikale Ausdehnung über die Fläche des anzuzeigenden Bildes variiert;
- ein Verarbeitungsmodul zum Bestimmen von Verdeckungsflächen für die einzelnen Teilflächen; und
- ein Warnmodul zum Ausgeben eines Warnsignals, wenn für zumindest eine der Teilflächen die bestimmte Verdeckungsfläche eine zulässige Größe überschreitet.

Bei der erfindungsgemäßen Lösung wird das anzuzeigende Bild in rechteckige Kacheln zerlegt, deren vertikale Ausdehnung innerhalb des Bildes variiert. Je kleiner ein Objekt, das von dem anzuzeigenden Bild überlagert wird, vom Betrachter wahrgenommen wird, desto kleiner sind auch die Kacheln im jeweiligen Bereich. Da die wahrgenommene Größe eines Objekts mit der Entfernung des Objekts variiert, sind die Kacheln in denjenigen Bereichen des Bildes klein, die weit entfernte Objekte überlagern. An oberen und unteren Rändern des Bildes sind die wahrgenommen Objekte wie direkt vorausfahrende oder auf einer Nachbarspur vorausfahrende Fahrzeuge am unteren Bildrand, oder wie überhängende Äste am oberen Bildrand, näher, daher können auch die Kacheln in diesen Bereichen größer sein. Anders als bei der Unterteilung des anzuzeigenden Bildes in Rechtecke gleicher Größe ist die maximale Größe der noch tolerierbaren hellen Fläche in den verschiedenen Bildbereichen unterschiedlich groß. Die unterteilenden Achsen laufen horizontal und vertikal durch das Sichtfeld, haben aber unterschiedliche Abstände voneinander. Die Unterteilung hängt vom Abstand vom Horizont ab, und entspricht somit angenähert den Größenverhältnissen des wahrgenommenen Bildes. Rechteckige Flächen sind einfach zu bearbeiten und zu berechnen, da die Bilddaten üblicherweise in Zeilen und Spalten, also nach einem rechteckigen Schema, aufgeteilt vorliegen. Variiert nur die vertikale Ausdehnung der Teilflächen, so können bei der Bearbeitung jeweils eine unterschiedliche Anzahl Zeilen zur gemeinsamen gleichartigen Bearbeitung zusammengefasst werden, während sich die Anzahl der Spalten einer Teilfläche nicht ändert. Der Erfinder der vorliegenden Erfindung hat herausgefunden, dass eine Anpassung der Größe der Teilflächen in der Höhe ausreichend ist, um ein sichere Verdeckungsreduzierung zu erzielen. Dabei ist eine feinere Aufteilung im Bereich des Horizonts vorgesehen, da sich dieser Bereich als bezüglich Verdeckung für die Fahrsicherheit kritischster Bereich herausgestellt hat. Das Warnsignal kann beispielsweise eine optische oder akustische Warnung sein. Vorzugsweise wird das Warnsignal dazu genutzt, die Bildausgabe des Head-Up-Displays abzuschalten. So wird das Anzeigeelement komplett auf "undurchsichtig" geschaltet und/oder die Hintergrundbeleuchtung des Anzeigeelements wird komplett abgeschaltet. Dies erhöht die Sicherheit.

Gemäß einem Aspekt der Erfindung wird beim Bestimmen der Verdeckungsflächen eine Transparenz der Teilflächen als Maß für die Verdeckungsfläche betrachtet. Die Transparenz ist ein einfach zu bestimmendes Maß dafür, wie groß der prozentuale Anteil der verdeckten Fläche innerhalb der jeweiligen Teilfläche ist.

Gemäß einem Aspekt der Erfindung wird vor dem Ausgeben eines Warnsignals überprüft, ob für zwei oder mehr benachbarte Teilflächen die bestimmte Verdeckungsfläche eine zulässige Größe überschreitet. Im ungünstigsten Fall verteilt sich der flächig helle Bereich, der zu einer Verdeckung führt, auf vier Teilflächen. Die zulässige Größe der Verdeckungsfläche innerhalb einer Teilfläche ist so gewählt, dass diese Situation berücksichtigt wird. Sofern eine Überprüfung benachbarter Teilfläche jedoch ergibt, dass dort die zulässige Größe der Verdeckungsfläche nicht überschritten ist und insgesamt eine tolerierbare Verdeckung vorliegt, kann auf die Ausgabe eines Warnsignals verzichtet werden.

Gemäß einem Aspekt der Erfindung weisen die Teilflächen eine abnehmende vertikale Ausdehnung von einem oberen und/oder einem unteren Randbereich des anzuzeigenden Bildes zum Horizont auf. Die Größen des durch den Betrachter wahrgenommenen Bildes folgen dem Horizont, d.h. Objekte werden umso kleiner wahrgenommen, je näher sie sich am Horizont befinden, und umso größer, je weiter oberhalb oder unterhalb sie sich vom Horizont befinden. Entsprechend ist auch die vertikale Ausdehnung der rechteckigen Teilflächen umso kleiner, je näher sie sich am Horizont befinden. Objekte, die sich unterhalb der Horizontlinie befinden, befinden sich umso näher am Fortbewegungsmittel, je weiter nach unten sie vom Horizont entfernt sind. Sie werden daher größer wahrgenommen als Objekte, die sich in der Nähe der Horizontlinie befinden. Objekte, die sich oberhalb der Horizontlinie befinden, sind entweder sehr weit vom Fortbewegungsmittel entfernt, und erscheinen so klein, dass sie im allgemeinen kaum oder gar nicht wahrgenommen werden. Oder die Objekte, die sich oberhalb der Horizontlinie befinden sind weniger weit entfernt als der Horizont, beispielsweise vor dem Fortbewegungsmittel fliegende Vögel, überhängende Äste, Schilderbrücken oder auch dicht vorausfahrende oder auf benachbarten Fahrspuren befindliche Fortbewegungsmittel. Solche Objekte werden ebenfalls größer wahrgenommen als Objekte, die sich in der Nähe des Horizonts befinden. Erfindungsgemäß ist daher vorgesehen, dass die vertikale Ausdehnung der Teilflächen sowohl unterhalb als auch oberhalb der Horizontlinie mit zunehmendem Abstand von der Horizontlinie zunimmt.

Gemäß einem Aspekt der Erfindung wird zum Bestimmen des Horizonts eine Neigung des Fortbewegungsmittels bestimmt. Aus der Neigung des Fortbewegungsmittels, die z.B. mittels Gyroskop-Sensoren erfasst werden kann, lässt sich leicht die die Lage des Horizonts bestimmen.

Gemäß einem Aspekt der Erfindung wird als Horizontlinie eine fest vorgegebene horizontale Zeile der Bilddaten des anzuzeigenden Bildes angenommen, und eine vertikale Verschiebung des gesamten darzustellenden Bildinhalts in Abhängigkeit von einer detektierten vertikalen Augenposition eines Nutzers vorgenommen. Dies vereinfacht die durchzuführenden Verfahrensschritte, da immer in einem fest vorgegebenen Raster gearbeitet wird. Dabei entfallen beispielsweise das Bestimmen einer aktuellen Horizontlinie in den Bilddaten des anzuzeigenden Bildes, das entsprechende Ermitteln bzw. Verschieben der horizontalen Begrenzungen der Teilflächen in vertikaler Richtung angepasst an die Position einer aktuellen Horizontallinie etc. Eine Anpassung der Horizontlinie an die vertikale Augenposition des Betrachters erfolgt dadurch, dass das gesamte dargestellte Bild nach oben oder unten verschoben wird, sodass die als Horizontallinie fest vorgegebene Zeile des Bildes mit dem tatsächlichen Horizont übereinstimmt. Die Augenposition des Betrachters wird beispielsweise mit einer Innenraumkamera erfasst. Derartige Innenraumkameras und Auswertungseinrichtungen dafür sind in vielen Fortbewegungsmitteln ohnehin vorhanden. Das Nutzen der von diesen ermittelten Informationen erfordert somit keinen oder nur einen geringen Zusatzaufwand. Auch Aktuatoren zur Anpassung der vertikalen Position des dargestellten Bildes sind üblicherweise vorhanden.

Gemäß einem Aspekt der Erfindung wird im Ansprechen auf das Warnsignal zumindest eine Maßnahme zum Reduzieren der Verdeckung durchgeführt. Beispielsweise kann zumindest ein Bildelement, das die Verdeckung verursacht, verschoben werden. Durch die Verschiebung des Bildelements in eine Teilfläche, die etwas weiter in Richtung des Bildrandes liegt, kann erreicht werden, dass die resultierende Verdeckungsfläche nicht länger die zulässige Größe überschreitet. Alternativ oder zusätzlich kann die von dem Bildelement verdeckte Fläche verringert werden. Dazu kann z.B. das Bildelement aus dünnen Linien aufgebaut werden oder lediglich als Umriss dargestellt werden.

Gemäß einem Aspekt der Erfindung wird eine Anzeige von Bildelementen im Bereich des Horizonts unterbunden. Zur weiteren Erhöhung der Sicherheit ist es vorteilhaft, wenn der Horizont an sich gänzlich von der Anzeige von Bildelementen ausgespart wird. Insbesondere bei hoher Geschwindigkeit kann beispielsweise ein Stauende sehr klein erscheinen und leicht verdeckt werden.

Vorzugsweise wird ein erfindungsgemäßes Verfahren oder eine erfindungsgemäße Vorrichtung in einem Head-Up-Display für ein Fortbewegungsmittel verwendet, z.B. einem Head-Up-Display für ein Kraftfahrzeug. Ein solches Head-Up-Display zeichnet sich durch eine erhöhte Sicherheit für den Fahrer aus, da Verdeckungen relevanter Objekte im Sichtbereich des Fahrers reduziert oder vollständig vermieden werden.

Gemäß einem Aspekt der Erfindung ist die erfindungsgemäße Vorrichtung auf einem Substrat des Anzeigeelements angeordnet. An dieser Stelle ist im allgemeinen wenig Platz vorhanden, und aufgrund schwieriger Wärmeabfuhrbedingungen ist es nicht möglich, größere Rechenoperationen erfordernde Elemente dort anzuordnen. Das erfindungsgemäße Verfahren kommt nun aber mit so wenigen und unkomplizierten Verfahrensschritten aus, dass es sowohl mit geringem Platzbedarf realisierbar ist als auch wenig Prozesswärme erzeugt, die abgeführt werden müsste. Die Erfindung ermöglicht es somit erstmals, eine Verdeckungserkennung und -reduzierung so dicht am bilderzeugenden Element anzuordnen, nämlich auf dem Substrat des Anzeigeelements. Damit sind kurze Leitungswege ermöglicht, was negative Effekte durch äußere Störeinflüsse reduziert.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Head-Up-Display gemäß dem Stand der Technik für ein Kraftfahrzeug;
- Fig. 2: zeigt eine Unterteilung eines anzuzeigenden Bildes in rechteckige Teilflächen;
- Fig. 3: zeigt eine Unterteilung eines anzuzeigenden Bildes in rechteckige Teilflächen unterschiedlicher vertikaler Ausdehnung;
- Fig. 4: zeigt schematisch ein Verfahren zum Reduzieren von Verdeckungen durch ein virtuelles Bild eines Head-Up-Displays eines Fortbewegungsm ittels;
- Fig. 5: zeigt schematisch eine erste Ausführungsform einer Vorrichtung zum Reduzieren von Verdeckungen durch ein virtuelles Bild eines Head-Up-Displays eines Fortbewegungsmittels;
- Fig. 6: zeigt schematisch eine zweite Ausführungsform einer Vorrichtung zum Reduzieren von Verdeckungen durch ein virtuelles Bild eines Head-Up-Displays eines Fortbewegungsmittels; und
- Fig. 7: zeigt die Anordnung einer Vorrichtung zum Reduzieren von Verdeckungen durch ein virtuelles Bild eines Head-Up-Displays eines Fortbewegungsmittels an dessen Anzeigeelement.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

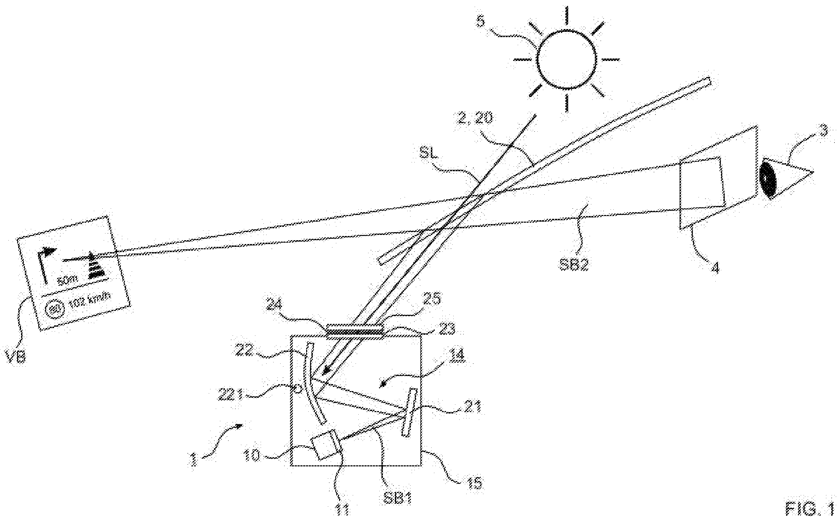

Fig. 1 zeigt eine Prinzipskizze eines Head-Up-Displays für ein Kraftfahrzeug. Das Head-Up-Display weist eine Anzeigevorrichtung 1 mit einer bildgebenden Einheit 10 und einer Optikeinheit 14 auf. Von einem Anzeigeelement 11 geht ein Strahlenbündel SB1 aus, welches von einem Faltspiegel 21 auf einen gekrümmten Spiegel 22 reflektiert wird, der es in Richtung einer Spiegeleinheit 2 reflektiert. Die Spiegeleinheit 2 ist hier als Windschutzscheibe 20 des Kraftfahrzeugs dargestellt. Von dort gelangt das Strahlenbündel SB2 in Richtung eines Auges eines Betrachters 3.

Der Betrachter 3 sieht ein virtuelles Bild VB, welches sich außerhalb des Kraftfahrzeugs oberhalb der Motorhaube oder sogar vor dem Kraftfahrzeug befindet. Durch das Zusammenwirken von Optikeinheit 14 und Spiegeleinheit 2 ist das virtuelle Bild VB eine vergrößerte Darstellung des vom Anzeigeelement 11 angezeigten Bildes. Hier sind symbolisch eine Geschwindigkeitsbegrenzung, die aktuelle Fahrzeuggeschwindigkeit sowie Navigationsanweisungen dargestellt. So lange sich das Auge des Betrachters 3 innerhalb einer durch ein Rechteck angedeuteten Eyebox 4 befindet, sind alle Elemente des virtuellen Bildes VB für den Betrachter 3 sichtbar. Befindet sich das Auge des Betrachters 3 außerhalb der Eyebox 4, so ist das virtuelle Bild VB für den Betrachter 3 nur noch teilweise oder gar nicht sichtbar. Je größer die Eyebox 4 ist, desto weniger eingeschränkt ist der Betrachter bei der Wahl seiner Sitzposition.

Die Krümmung des gekrümmten Spiegels 22 ist an die Krümmung der Windschutzscheibe 20 angepasst und sorgt dafür, dass die Bildverzeichnung über die gesamte Eyebox 4 stabil ist. Der gekrümmte Spiegel 22 ist mittels einer Lagerung 221 drehbar gelagert. Die dadurch ermöglichte Drehung des gekrümmten Spiegels 22 ermöglicht ein Verschieben der Eyebox 4 und somit eine Anpassung der Position der Eyebox 4 an die Position des Betrachters 3. Der Faltspiegel 21 dient dazu, dass der vom Strahlenbündel SB1 zurückgelegte Weg zwischen Anzeigeelement 11 und gekrümmtem Spiegel 22 lang ist, und gleichzeitig die Optikeinheit 14 dennoch kompakt ausfällt. Die bildgebende Einheit 10 und die Optikeinheit 14 werden durch ein Gehäuse 15 mit einer transparenten Abdeckscheibe 23 gegen die Umgebung abgegrenzt. Die optischen Elemente der Optikeinheit 14 sind somit beispielsweise gegen im Innenraum des Fahrzeugs befindlichen Staub geschützt. Auf der Abdeckscheibe 23 kann sich weiterhin eine optische Folie bzw. ein Polarisator 24 befinden. Das Anzeigeelement 11 ist typischerweise polarisiert und die Spiegeleinheit 2 wirkt wie ein Analysator. Zweck des Polarisators 24 ist es daher, die Polarisation zu beeinflussen, um eine gleichmäßige Sichtbarkeit des Nutzlichts zu erzielen. Eine auf der Abdeckscheibe 23 angeordnete Abdeckanordnung 25 dient dazu, das über die Grenzfläche der Abdeckscheibe 23 reflektierte Licht sicher zu absorbieren, sodass keine Blendung des Betrachters hervorgerufen wird. Außer dem Sonnenlicht SL kann auch das Licht einer anderen Störlichtquelle 5 auf das Anzeigeelement 11 gelangen. In Kombination mit einem Polarisationsfilter kann der Polarisator 24 zusätzlich auch genutzt werden, um einfallendes Sonnenlicht SL zu reduzieren.

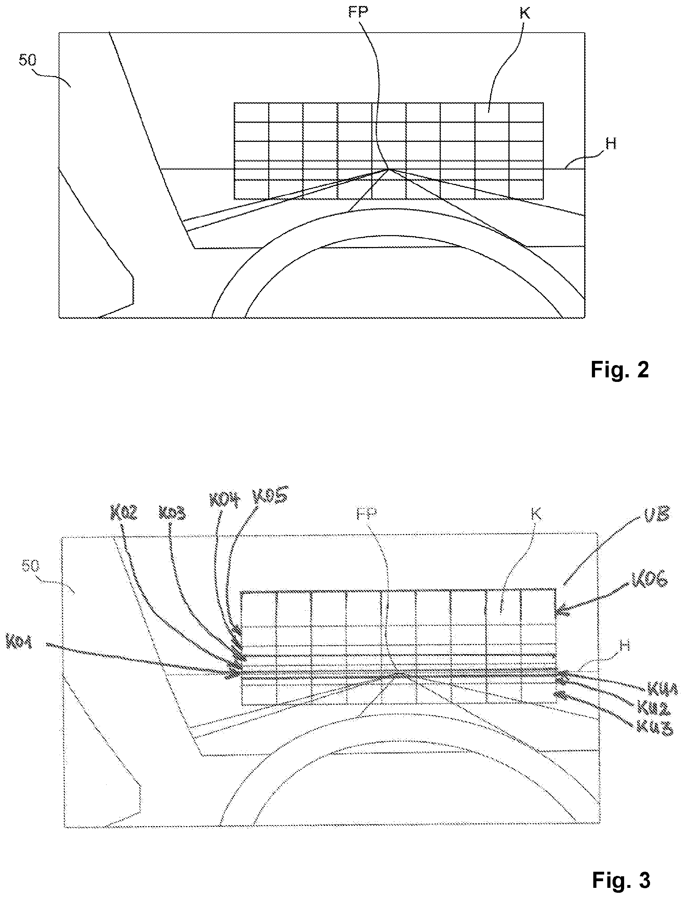

Fig. 2 zeigt eine Unterteilung eines anzuzeigenden Bildes in rechteckige Teilflächen K. Dargestellt sind das resultierende virtuelle Bild VB und die Teilflächen K aus Sicht des Fahrers eines Fortbewegungsmittels 50. Bei den Teilflächen K handelt es sich um Rechtecke mit einheitlicher Größe. Gut erkennbar ist, dass die Teilflächen K im Bereich des Fluchtpunktes FP oder des Horizonts H einen größeren wahrgenommenen Bereich der Umgebung abdecken, als Teilflächen K am Rand des Bildes. Beispielsweise erstreckt sich die Teilfläche K am Fluchtpunkt FP über die gesamte Straßenbreite, während die Teilflächen K am unteren Rand jeweils nur einen Bruchteil der Straße abdecken.

Fig. 3 zeigt eine Unterteilung eines anzuzeigenden Bildes in rechteckige Teilflächen K, KO1-KO5, KU1-KU3 unterschiedlicher vertikaler Ausdehnung. Dargestellt sind wiederum das resultierende virtuelle Bild VB und die Teilflächen K, KO1-KO5, KU1-KU3 aus Sicht des Fahrers eines Fortbewegungsmittels 50. Die Teilflächen KO5, KO4, KO3, KO2, KO1 weisen vom oberen Rande des Bildes zum Horizont H eine abnehmende Höhe auf. Ihre vertikale Ausdehnung nimmt also von oben nach unten gesehen ab. Die Teilflächen KU3, KU2, KU1 weisen vom unteren Rand des Bildes zum Horizont H hin eine abnehmende Höhe auf. Ihre vertikale Ausdehnung nimmt also von oben nach unten gesehen zu. Da die wahrgenommene Größe eines Objekts mit der Entfernung des Objekts variiert, sind die Teilflächen K, KO1-KO5, KU1-KU3 in denjenigen Bereichen des Bildes klein, die weit entfernte Objekte überlagern. Im oberen und unteren Bereich des Bildes sind die wahrgenommen Objekte näher, daher können auch die äußerst oberen bzw. äußerst unteren Teilflächen KO5 bzw. KU3 größer sein als die jeweils näher am Horizont H gelegenen Teilflächen KO4-KO1 bzw. KU2-KU1. Zusätzlich ist in einer alternativen Variante der Bereich direkt um den Horizont herum, hier die Teilflächen KO1 und KU1, gänzlich von der Anzeige von Bildelementen ausgespart. Die Teilflächen KOn mit n=1...5 und KUn mit n=1...3 haben eine rechteckige Form, und waagrecht nebeneinanderliegende Teilflächen, also solche mit gleichem Wert für n, haben gleiche Breite und gleiche Höhe. Die Teilflächen KO6 am oberen Rand des Bildes haben annähernd quadratische Form und sind in dieser Darstellung die Teilflächen größter Fläche. Gemäß einer hier nicht dargestellten Variante ist vorgesehen, dass zumindest die Teilflächen K, die am äußersten linken und rechten Rand liegen, zusätzlich eine größere horizontale Ausdehnung aufweisen, als die weiter innen liegenden Teilflächen. Auch hier kann vorzugsweise auf eine aufwendige Bestimmung der exakten Lage des Fluchtpunkts FP und eine davon abhängige variable Bestimmung der Verdeckung verzichtet werden.

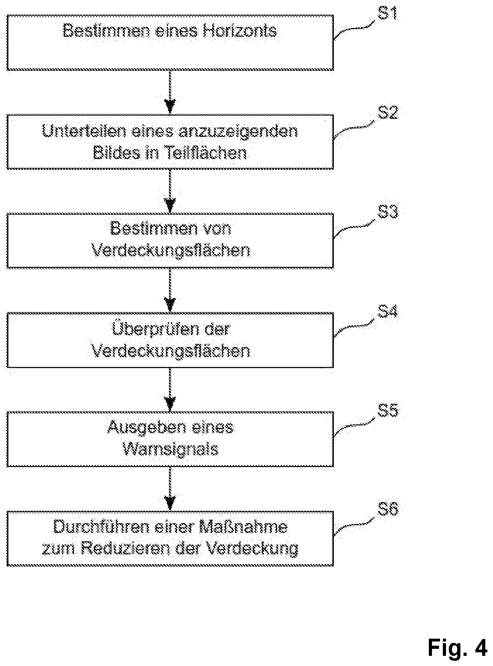

Fig. 4 zeigt schematisch ein Verfahren zum Reduzieren von Verdeckungen durch ein virtuelles Bild eines Head-Up-Displays eines Fortbewegungsmittels. In einem ersten Schritt wird ein Horizont bestimmt S1. Zum Bestimmen S1 des Horizonts kann zuvor eine Neigung des Fortbewegungsmittels bestimmt werden. Alternativ kann hingegen eine vertikale Augenposition eines Betrachters bestimmt werden. In Abhängigkeit vom bestimmten Horizont wird die vertikale Position des gesamten anzuzeigenden Bildes angepaßt, vorzugsweise durch Verkippen des gekrümmten Spiegels 22 um dessen Lagerung 221. Anschließend wird ein anzuzeigendes Bild in eine Mehrzahl von Teilflächen unterteilt S2. Die Teilflächen sind dabei rechteckig und ihre vertikale Ausdehnung variiert über die Fläche des anzuzeigenden Bildes. Die Teilflächen weisen eine abnehmende vertikale Ausdehnung von einem oberen oder einem unteren Randbereich des anzuzeigenden Bildes zum Horizont hin auf. Vorzugsweise wird als Horizont eine fest vorgegebene Zeile der Bilddaten des anzuzeigenden Bildes verwendet. Für die einzelnen Teilflächen werden Verdeckungsflächen bestimmt S3. Dabei kann z.B. eine Transparenz der Teilflächen als Maß für die Verdeckungsfläche betrachtet werden. Abschließend wird überprüft S4, ob für zumindest eine der Teilflächen die bestimmte Verdeckungsfläche eine zulässige Größe überschreitet. Wenn dies der Fall ist, wird ein Warnsignal ausgegeben S5. Vor dem Ausgeben eines Warnsignals kann optional überprüft werden, ob für zwei oder mehr benachbarte Teilflächen die bestimmte Verdeckungsfläche eine zulässige Größe überschreitet. Im Ansprechen auf das Warnsignal wird schließlich zumindest eine Maßnahme zum Reduzieren der Verdeckung durchgeführt S6. Vorzugsweise wird dabei eine Anzeige von Bildelementen im Bereich des Horizonts unterbunden.

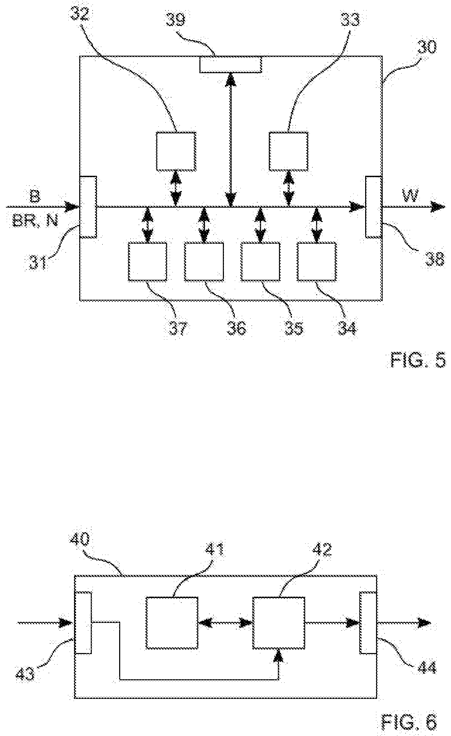

Fig. 5 zeigt eine vereinfachte schematische Darstellung einer ersten Ausführungsform einer Vorrichtung 30 zum Reduzieren von Verdeckungen durch ein virtuelles Bild eines Head-Up-Displays eines Fortbewegungsmittels. Die Vorrichtung 30 hat einen Eingang 31, über den ein anzuzeigendes Bild B empfangen wird. Über den Eingang 31 können zudem Informationen **N, BR** empfangen werden, aus denen ein Auswertemodul 32 einen Horizont bestimmen kann. Zum Bestimmen des Horizonts kann z.B. eine Neigung N des Fortbewegungsmittels ausgewertet werden. Zum Bestimmen des Horizonts kann auch eine vertikale Augenposition BR eines Betrachters ausgewertet werden. Ein Unterteilungsmodul 33 ist eingerichtet, das anzuzeigende Bild B in eine Mehrzahl von Teilflächen zu unterteilen. Die Teilflächen sind dabei rechteckig und ihre vertikale Ausdehnung variiert über die Fläche des anzuzeigenden Bildes B. Vorzugsweise weisen die Teilflächen eine abnehmende Größe von einem oberen und/oder unteren Randbereich des anzuzeigenden Bildes B zum Horizont auf. Ein Verarbeitungsmodul 34 ist eingerichtet, Verdeckungsflächen für die einzelnen Teilflächen zu bestimmen. Dabei kann das Verarbeitungsmodul 34 z.B. eine Transparenz der Teilflächen als Maß für die Verdeckungsfläche betrachten. Das Verarbeitungsmodul 34 ist zudem eingerichtet, zu überprüfen, ob für zumindest eine der Teilflächen die bestimmte Verdeckungsfläche eine zulässige Größe überschreitet. Ein Warnmodul 35 ist eingerichtet, ein Warnsignal W auszugeben, wenn dies der Fall ist. Vor dem Ausgeben eines Warnsignals W kann das Verarbeitungsmodul 34 optional überprüfen, ob für zwei oder mehr benachbarte Teilflächen die bestimmte Verdeckungsfläche eine zulässige Größe überschreitet. Das Warnsignal W kann über einen Ausgang 38 der Vorrichtung 30 ausgegeben werden, z.B. um zumindest eine Maßnahme zum Reduzieren der Verdeckung auszulösen. Vorzugsweise wird dabei eine Anzeige von Bildelementen im Bereich des Horizonts unterbunden.

Das Auswertemodul 32, das Unterteilungsmodul 33, das Verarbeitungsmodul 34 und das Warnmodul 35 können von einem Kontrollmodul 36 gesteuert werden. Über eine Benutzerschnittstelle 39 können gegebenenfalls Einstellungen des Auswertemoduls 32, des Unterteilungsmoduls 33, des Verarbeitungsmoduls 34, des Warnmoduls 35 oder des Kontrollmoduls 36 geändert werden. Die in der Vorrichtung 30 anfallenden Daten können bei Bedarf in einem Speicher 37 der Vorrichtung 30 abgelegt werden, beispielsweise für eine spätere Auswertung oder für eine Nutzung durch die Komponenten der Vorrichtung 30. Das Auswertemodul 32, das Unterteilungsmodul 33, das Verarbeitungsmodul 34, das Warnmodul 35 sowie das Kontrollmodul 36 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 31 und der Ausgang 38 können als getrennte Schnittstellen oder als eine kombinierte Schnittstelle implementiert sein.

Fig. 6 zeigt eine vereinfachte schematische Darstellung einer zweiten Ausführungsform einer Vorrichtung 40 zum Reduzieren von Verdeckungen durch ein virtuelles Bild eines Head-Up-Displays eines Fortbewegungsmittels. Die Vorrichtung 40 weist einen Prozessor 42 und einen Speicher 41 auf. Beispielsweise handelt es sich bei der Vorrichtung 40 um einen Controller oder ein eingebettetes System. Im Speicher 41 sind Instruktionen abgelegt, die die Vorrichtung 40 bei Ausführung durch den Prozessor 42 veranlassen, die Schritte gemäß einem der beschriebenen Verfahren auszuführen. Die im Speicher 41 abgelegten Instruktionen verkörpern somit ein durch den Prozessor 42 ausführbares Programm, welches das erfindungsgemäße Verfahren realisiert. Die Vorrichtung 40 hat einen Eingang 43 zum Empfangen von Informationen. Vom Prozessor 42 generierte Daten werden über einen Ausgang 44 bereitgestellt. Darüber hinaus können sie im Speicher 41 abgelegt werden. Der Eingang 43 und der Ausgang 44 können zu einer bidirektionalen Schnittstelle zusammengefasst sein.

Der Prozessor 42 kann eine oder mehrere Prozessoreinheiten umfassen, beispielsweise Mikroprozessoren, digitale Signalprozessoren oder Kombinationen daraus.

Die Speicher 37, 41 der beschriebenen Vorrichtungen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

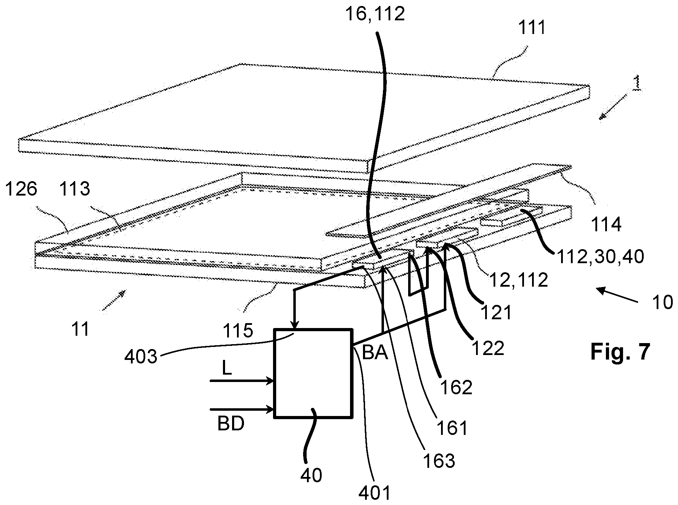

Fig.7 zeigt die Anordnung einer Vorrichtung 30,40 zum Reduzieren von Verdeckungen durch ein virtuelles Bild VB eines Head-Up-Displays eines Fortbewegungsmittels an dessen Anzeigeelement 11. Gezeigt ist eine perspektivische Darstellung einer Ausführungsform einer Anzeigevorrichtung 1 eines erfindungsgemäßen Head-Up-Displays mit mehreren elektronischen Bauteilen 112, von denen eines ein Treiber 12 ist. Ein wärmeleitendes Element 114 ist über den elektronischen Bauteilen 112 angeordnet. Dargestellt ist eine perspektivische Explosionszeichnung der Anzeigevorrichtung 1. Bei den elektronischen Bauteilen 112 handelt es sich bei diesem Ausführungsbeispiel um eine Bildhelligkeitsüberwachungseinrichtung 16, einen Treiber 12 für das Anzeigeelement 11, und eine erfindungsgemäße Vorrichtung 30,40, die alle drei auf einem Substrat 115 des Anzeigeelements 11 angrenzend an eine hier gestrichelt dargestellte aktive Fläche 113 angeordnet sind. Auf der aktiven Fläche 113 befindet sich eine Abdeckung 126, deren Ausgestaltung und Funktion vom Display-Typ abhängt. Bei einem Flüssigkristalldisplay ist die Abdeckung 126 beispielsweise ein Farbfilter-Glas, bei einem OLED-Display hingegen ein Deckglas, das zur Einkapselung benötigt wird. Die aktive Fläche 113 ist typischerweise geringfügig kleiner als die Abdeckung 126. Oberhalb des Anzeigeelements 11 ist ein Deckglas 111 vorgesehen. Das wärmeleitende Element 114 erstreckt sich hier über die gesamte Breite des Anzeigeelements 11 und somit über alle drei Bauteile 112. Durch das flächige Aufbringen eines wärmeleitenden Elements 114 aus einem geeigneten Material mit hohem Wärmeleitwert wird der Wärmeeintrag der Bauteile 112 gleichmäßig verteilt und die Temperatur an ihnen reduziert. Das erfindungsgemäße Verfahren ermöglicht es, die Verdeckungserkennung und die Verdeckungsreduzierung mit so wenigen Verfahrensschritten durchzuführen, dass diese problemlos auf einem der elektronischen Bauteile 112 implementierbar sind, die direkt auf dem Substrat 115 des Anzeigeelements 11 angeordnet sind. Die als eines der Bauteile 112 vorgesehene Vorrichtung 30,40 ist hier zwar als einzelnes Bauteil 112 angegeben, sie ist aber vorzugsweise mit der Bildhelligkeitsüberwachungseinrichtung 16 kombiniert in einem einzigen Bauteil 112 realisiert.

Bei großen, hellen Head-Up-Displays, die einen großen Bereich des Fahrersichtfeldes überdecken, ergibt sich neben dem Problem der Blendung das Problem der Verdeckung. Dabei geht es darum, wie vermieden werden kann, dass ein wichtiges Objekt, wie beispielsweise ein Radfahrer, ein Fußgänger, ein Tier, ein auf die Straße rollender Fußball, oder ähnliches, durch einen hell leuchtenden, insbesondere weißen, Bereich im virtuellen Bild des Head-Up-Displays verdeckt wird und daher nicht durch den Fahrer wahrgenommen werden kann. Ein genereller Ansatz ist, dass man größere, vollflächig leuchtende Bereiche auf dem LC-Display vermeidet. Bei einem solchen vollflächig leuchtenden Bereich ist das LC-Display in dem entsprechenden Bereich transparent, sodass das Licht seiner Hintergrundbeleuchtung durchgelassen wird. Das virtuelle Bild VB wird vorzugsweise aus dünnen Strichen aufbaut, anstatt gefüllte Flächen zu verwenden. Damit wird eine mögliche Verdeckung reduziert.

Zur Überwachung der Verdeckung wird das Virtuelle Bild VB in kleine Rechtecke zerlegt, die auch Kacheln genannt werden, und die man dann auf Ihre Transparenz überprüft. Dabei ist zu beachten, dass die so überprüfte Transparenz nur ein Viertel so groß sein darf, wie die maximale zulässige Verdeckungsfläche, da sich der flächig weiße (leuchtende) Bereich im schlimmsten Fall genau auf vier aneinandergrenzende Rechtecke aufteilen könnte. Um im Head-Up-Display eine Verdeckungsvermeidung für die Funktionale Sicherheit zu realisieren, wird eine Überwachung der Bildtransparenz gefordert. Üblicherweise wird diese Überwachung in einem Chip auf dem Übertragungsweg vor dem Display realisiert. Auf einem Interface (Interface: Schnittstelle) zum Display Controller oder auch im Eingangsbereich des Display Controllers können noch Fehlfunktionen auftreten. Weiterhin ist eine Nachverfolgung der Position des Auges eines Betrachters (sogenanntes Eyetracking) zur Blickrichtungserkennung technisch anspruchsvoll.

Gemäß einer Ausgestaltung der Erfindung ist vorgesehen, die Verdeckungsüberwachung möglichst weit nach hinten in der Übertragungskette anzuordnen und/oder das Konzept zur Verdeckungsüberwachung soweit zu vereinfachen, dass es sich problemlos auf einem nahe am LC-Display befindlichen Bauteil realisieren läßt. Es wird vorgeschlagen, die Höhe der Kacheln, also ihre Ausdehnung in vertikaler Richtung, über die Fläche des darzustellenden Bildes zu variieren. Zusätzlich wird vorgeschlagen, die Verdeckungsüberwachung im Displaycontroller zu implementieren, also auf einem Bauteil, welches auf dem Substrat 115, dem Displayglas, angeordnet ist. Dabei wird das komplexe Eyetracking oder die Bestimmung eines Fluchtpunkts durch die Annahme einer fixen Horizonthöhe ersetzt. Vorteilhaft ist dies erweitert um die Information der Höhe durch die Eyeboxverstellung, also die vertikale Anpassung der Darstellung des Virtuellen Bildes an die Höhe der Position des Auges des Betrachters 3. Eine solche Funktion ist ohnehin für das Head-Up-Display vorgesehen und erfolgt beispielsweise durch eine mechanische Verstellung des gekrümmten Spiegels 22 mittels dessen Lagerung 221. In zukünftigen Fahrzeugen mit Steuerungen für das hochautomatisierte Fahren ist zu erwarten, dass die Bestimmung der vertikalen Lage des Horizonts über die für das hochautomatisierten Fahren verwendeten Bildverarbeitung erfolgt. Die mechanische Eyeboxverstellung kann damit die Darstellung des Virtuellen Bildes besonders gut an den tatsächlichen Horizont anpassen. Somit wird lediglich eine Abhängigkeit der Kachelgröße vom vertikalen Abstand zum Horizont durchgeführt. Dies vereinfacht eine Implementierung auf einem nahe an der aktiven Fläche 113 des LC-Displays angeordneten Bauteil, beispielsweise auf einem Displaytimingcontroller (eine Steuerungseinheit, mit der unter anderem die zeitliche Abfolge der auf dem LC-Display dargestellten Bildpunkte gesteuert wird). Vorzugsweise ist die Verdeckungsüberwachung möglichst weit hinten in der Verarbeitungskette des Display Controllers angeordnet. Dies stellt sicher, dass möglichst viele potentielle Einflüsse, die eine unerwünschte Verdeckung hervorrufen könnten, abgedeckt werden, beispielsweise auch solche, die erst in vorgelagerten Verarbeitungsschritten des Displaytimingcontrollers auftreten. Unabhängig davon werden Einflüsse, die eine unerwünschte Verdeckung hervorrufen können, und die auf dem Interface zwischen einem Grafikchip, der das anzuzeigende Bild B bereitstellt, und einem Display Controller, der die aktive Fläche 113 des LC-Displays ansteuert, überwacht und erkannt. Somit wird die Sicherheit im Betrieb des Head-Up-Displays erhöht.

### Bezugszeichenliste

- 1: Anzeigevorrichtung
- 2: Spiegeleinheit
- 3: Betrachter
- 4: Eyebox
- 5: Störlichtquelle

- 10: Bildgebende Einheit
- 11: Anzeigeelement
- 111: Deckglas
- 112: elektronisches Bauteil
- 113: aktive Fläche
- 114: wärmeleitendes Element
- 115: Substrat
- 12: Treiber
- 126: Abdeckung
- 14: Optikeinheit
- 15: Gehäuse
- 16: Bildhelligkeitsüberwachungseinrichtung

- 20: Windschutzscheibe
- 21: Faltspiegel
- 22: Gekrümmter Spiegel
- 221: Lagerung
- 23: Abdeckscheibe
- 24: Optische Folie/Polarisator
- 25: Abdeckanordnung

- 30: Vorrichtung
- 31: Eingang
- 32: Auswertemodul
- 33: Unterteilungsmodul
- 34: Verarbeitungsmodul
- 35: Warnmodul
- 36: Kontrollmodul
- 37: Speicher
- 38: Ausgang
- 39: Benutzerschnittstelle

- 40: Vorrichtung
- 41: Speicher
- 42: Prozessor
- 43: Eingang
- 44: Ausgang

- 50: Fortbewegungsmittel

- B: Anzuzeigendes Bild
- BR: vertikale Augenposition
- FP: Fluchtpunkt
- H: Horizont
- K, KO1...KO5, KU1...KU3: Teilfläche
- N: Neigung
- SB1, SB2: Strahlenbündel
- SL: Sonnenlicht
- VB: Virtuelles Bild
- W: Warnsignal

- S1: Bestimmen eines Horizonts
- S2: Unterteilen eines anzuzeigenden Bildes in Teilflächen
- S3: Bestimmen von Verdeckungsflächen
- S4: Überprüfen der Verdeckungsflächen
- S5: Ausgeben eines Warnsignals
- S6: Durchführen einer Maßnahme zum Reduzieren der Verdeckung

## Patentansprüche

1. Computerimplementiertes Verfahren zum Reduzieren von Verdeckungen durch ein virtuelles Bild (VB) eines Head-Up-Displays eines Fortbewegungsmittels (50), mit den Schritten:
- Bestimmen (S1) eines Horizonts (H);
- Unterteilen (S2) eines als das virtuelle Bild anzuzeigenden Bildes in eine Mehrzahl von Teilflächen (K, KO1...KO5, KU1...KU3), wobei die Teilflächen (K, KO1...KO5, KU1...KU3) rechteckig sind und die vertikale Ausdehnung der rechteckigen Teilflächen um so kleiner ist, je näher sie sich am Horizont befinden;
- Bestimmen (S3) einer Verdeckungsfläche für jede einzelne Teilfläche (K, KO1 ... KO5, KU1 ... KU5) des anzuzeigenden Bildes, wobei die Verdeckungsfläche diejenigen Flächen umfasst, die in der zugehörigen einzelnen Teilfläche zu Verdeckungen durch das anzuzeigende Bild führen; und
- Ausgeben (S5) eines Warnsignals (W), wenn für zumindest eine der Teilflächen (K, KO1...KO5, KU1...KU3) die bestimmte Verdeckungsfläche eine zulässige Größe überschreitet.

2. Verfahren gemäß Anspruch 1, wobei beim Bestimmen (S3) der Verdeckungsflächen eine Transparenz der Teilflächen (K, KO1...KO5, KU1...KU3) als Maß für die Verdeckungsfläche betrachtet wird und angibt, wie groß der prozentuale Anteil der verdeckten Fläche innerhalb der jeweiligen Teilfläche ist.

3. Verfahren gemäß Anspruch 1 oder 2, wobei vor dem Ausgeben (S5) eines Warnsignals (W) überprüft wird (S4), ob für zwei oder mehr benachbarte Teilflächen (K, KO1...KO5, KU1...KU3) die bestimmte Verdeckungsfläche eine zulässige Größe überschreitet.

4. Verfahren gemäß einem der vorherigen Ansprüche, wobei zum Bestimmen (S1) des Horizonts (H) eine Neigung (N) des Fortbewegungsmittels (50) bestimmt wird.

5. Verfahren gemäß einem der vorherigen Ansprüche, wobei der Horizont (H) eine fest vorgegebene horizontale Zeile der Bilddaten des anzuzeigenden Bildes (B) ist, und eine vertikale Verschiebung des gesamten darzustellenden Bildinhalts in Abhängigkeit von einer detektierten vertikalen Augenposition (BR) eines Betrachters (3) vorgenommen wird.

6. Verfahren gemäß einem der vorherigen Ansprüche, wobei im Ansprechen auf das Warnsignal (W) zumindest eine Maßnahme zum Reduzieren der Verdeckung durchgeführt wird (S6).

7. Verfahren gemäß Anspruch 6, wobei eine Anzeige von Bildelementen im Bereich des Horizonts (H) unterbunden wird.

8. Computerprogramm mit Instruktionen, die bei Ausführung durch einen Computer den Computer zur Ausführung der Schritte eines Verfahrens gemäß einem der Ansprüche 1 bis 7 zum Reduzieren von Verdeckungen durch ein virtuelles Bild (VB) eines Head-Up-Displays eines Fortbewegungsmittels (50) veranlassen.

9. Vorrichtung (30,40) zum Reduzieren von Verdeckungen durch ein virtuelles Bild (VB) eines Head-Up-Displays eines Fortbewegungsmittels (50), mit:
- einem Auswertemodul (32) eingerichtet zum Bestimmen (S1) eines Horizonts (H);
- einem Unterteilungsmodul (33,42) eingerichtet zum Unterteilen (S2) eines als das virtuelle Bild anzuzeigenden Bildes in eine Mehrzahl von Teilflächen (K, KO1...KO5, KU1...KU3), wobei die Teilflächen (K, KO1...KO5, KU1...KU3) rechteckig sind und die vertikale Ausdehnung der rechteckigen Teilflächen um so kleiner ist, je näher sie sich am Horizont befinden;
- einem Verarbeitungsmodul (34,42) eingerichtet zum Bestimmen (S3) einer Verdeckungsfläche für jede einzelne Teilfläche (K, KO1 ... KO5, KU1 ... KU5) des anzuzeigenden Bildes, wobei die Verdeckungsfläche diejenigen Flächen umfasst, die in der zugehörigen einzelnen Teilfläche zu Verdeckungen durch das anzuzeigende Bild führen; und
- einem Warnmodul (35,42) eingerichtet zum Ausgeben (S5) eines Warnsignals (W), wenn für zumindest eine der Teilflächen (K, KO1...KO5, KU1...KU3) die bestimmte Verdeckungsfläche eine zulässige Größe überschreitet.

10. Head-Up-Display für ein Fortbewegungsmittel (50), wobei das Head-Up-Display eine Vorrichtung (30,40) gemäß Anspruch 9 aufweist oder eingerichtet ist, ein Verfahren gemäß einem der Ansprüche 1 bis 7 zum Reduzieren von Verdeckungen durch ein virtuelles Bild (VB) des Head-Up-Displays auszuführen.

11. Head-Up-Display gemäß Anspruch 10, wobei die Vorrichtung (30,40) auf einem Substrat (115) des Anzeigeelements (11) angeordnet ist.

## Claims

1. A computer-implemented method for reducing concealment by a virtual image (VB) of a head-up display of a means of transport (50), comprising the steps:
- determining (S1) a horizon (H);
- subdividing (S2) an image to be displayed into a plurality of partial areas (K, KO1...KO5, KU1...KU3), wherein the partial areas (K, KO1...KO5, KU1...KU3) are rectangular and the vertical extent of the rectangular partial areas is the smaller the closer they are to the horizon;
- determining (S3) a concealment area for each individual partial area (K, KO1, ... KO5, KU1 ... KU5) of the image to be displayed, wherein the concealment area comprises those areas which lead to concealment by the image to be displayed in the associated individual partial area;
and
- outputting (S5) a warning signal (W) if the determined concealment area exceeds a permissible size for at least one of the partial areas (K, KO1...KO5, KU1...KU3).

2. The method according to claim 1, wherein a transparency of the partial areas (K, KO1...KO5, KU1...KU3) is considered as a measure of the concealment area when determining (S3) the concealment areas.

3. The method according to claim 1 or 2, wherein before outputting (S5) a warning signal (W), it is checked (S4) whether the determined concealment area exceeds a permissible size for two or more adjacent partial areas (K, KO1...KO5, KU1...KU3).

4. The method according to any one of the preceding claims, wherein an inclination (N) of the means of transport (50) is determined for determining (S1) the horizon (H).

5. The method according to any one of the preceding claims, wherein the horizon (H) is a fixedly predefined horizontal line of the image data of the image (B) to be displayed, and a vertical displacement of the entire image content to be represented is performed depending on a detected vertical eye position (BR) of a viewer (3).

6. The method according to any one of the preceding claims, wherein at least one measure for reducing the concealment is implemented (S6) in response to the warning signal (W).

7. The method according to claim 6, wherein a display of image elements in the region of the horizon (H) is prevented.

8. A computer program comprising instructions which, when executed by a computer, cause the computer to carry out the steps of a method according to any one of claims 1 to 7 for reducing concealment by a virtual image (VB) of a head-up display of a means of transport (50).

9. A device (30, 40) for reducing concealment by a virtual image (VB) of a head-up display of a means of transport (50), comprising:
- an evaluation module (32), configured to determine (S1) a horizon (H);
- a subdividing module (33, 42), configured for subdividing (S2) an image to be displayed into a plurality of partial areas (K, KO1...KO5, KU1...KU3), wherein the partial areas (K, KO1...KO5, KU1...KU3) are rectangular and the vertical extent of the rectangular partial areas is the smaller the closer they are to the horizon;
- a processing module (34, 42), configured to determine (S3) a concealment area for each individual partial area (K, KO1, ... KO5, KU1 ... KU5) of the image to be displayed, wherein the concealment area comprises those areas which lead to concealment by the image to be displayed in the associated individual partial area; and
- a warning module (35, 42), configured for outputting (S5) a warning signal (W) if the determined concealment area exceeds a permissible size for at least one of the partial areas (K, KO1...KO5, KU1...KU3).

10. A head-up display for a means of transport (50), wherein the head-up display has a device (30, 40) according to claim 9 or is configured to carry out a method according to any one of claims 1 to 7 for reducing concealment by a virtual image (VB) of the head-up display.

11. The head-up display according to claim 10, wherein the device (30, 40) is arranged on a substrate (115) of the display element (11).

## Revendications

1. Procédé mis en œuvre par ordinateur pour réduire les occultations dues à une image virtuelle (VB) d'un affichage tête haute d'un moyen de transport (50), comprenant les étapes suivantes :
- la détermination (S1) d'un horizon (H) ;
- la subdivision (S2) d'une image à afficher en tant que l'image virtuelle en une pluralité de surfaces partielles (K, KO1... KO5, KU1... KU3), dans lequel les surfaces partielles (K, KO1... KO5, KU1... KU3) sont rectangulaires et l'étendue verticale des surfaces partielles rectangulaires est plus petite à mesure qu'elles se rapprochent de l'horizon ;
- la détermination (S3) d'une surface d'occultation pour chaque surface partielle individuelle (K, KO1... KO5, KU1... KU5) de l'image à afficher, dans lequel la surface d'occultation comprend les surfaces qui, dans la surface partielle individuelle correspondante, conduisent à des occultations dues à l'image à afficher ;
et
- l'émission (S5) d'un signal d'avertissement (W) si la surface d'occultation déterminée dépasse une taille admissible pour au moins l'une des surfaces partielles (K, KO1... KO5, KU1... KU3).

2. Procédé selon la revendication 1, dans lequel, lors de la détermination (S3) des surfaces d'occultation, la transparence des surfaces partielles (K, KO1... KO5, KU1... KU3) est considérée comme une mesure de la surface d'occultation et indique le pourcentage de la surface d'occultation au sein de la surface partielle respective.

3. Procédé selon la revendication 1 ou 2, dans lequel avant l'émission (S5) d'un signal d'avertissement (W), il est vérifié (S4) si la surface d'occultation déterminée dépasse une taille admissible pour deux ou plusieurs surfaces partielles adjacentes (K, KO1... KO5, KU1... KU3).

4. Procédé selon l'une quelconque des revendications précédentes, dans lequel une inclinaison (N) du moyen de transport (50) est déterminée pour déterminer (S1) l'horizon (H).

5. Procédé selon l'une quelconque des revendications précédentes, dans lequel l'horizon (H) est une ligne horizontale prédéfinie des données d'image de l'image (B) à afficher, et un déplacement vertical de l'ensemble du contenu d'image à afficher est effectué en fonction d'une position verticale détectée des yeux (BR) d'un observateur (3).

6. Procédé selon l'une quelconque des revendications précédentes, dans lequel, en réponse au signal d'avertissement (W), au moins une mesure visant à réduire l'occultation est réalisée (S6).

7. Procédé selon la revendication 6, dans lequel l'affichage des éléments d'image dans la région de l'horizon (H) est empêché.

8. Programme informatique comportant des instructions qui, lorsqu'elles sont exécutées par un ordinateur, amènent l'ordinateur à exécuter les étapes d'un procédé selon l'une quelconque des revendications 1 à 7 pour réduire les occultations dues à une image virtuelle (VB) d'un affichage tête haute d'un moyen de transport (50).

9. Dispositif (30, 40) pour réduire les occultations dues à une image virtuelle (VB) d'un affichage tête haute d'un moyen de transport (50), comprenant :
- un module d'évaluation (32) configuré pour déterminer (S1) un horizon (H) ;
- un module de subdivision (33, 42) configuré pour subdiviser (S2) une image à afficher en tant que l'image virtuelle en une pluralité de surfaces partielles (K, KO1... KO5, KU1... KU3), dans lequel les surfaces partielles (K, KO1... KO5, KU1... KU3) sont rectangulaires et l'étendue verticale des surfaces partielles rectangulaires est plus petite à mesure qu'elles se rapprochent de l'horizon ;
- un module de traitement (34, 42) configuré pour déterminer (S3) une surface d'occultation pour chaque surface partielle individuelle (K, KO1... KO5, KU1... KU5) de l'image à afficher, dans lequel la surface d'occultation comprend les surfaces qui, dans la surface partielle individuelle correspondante, conduisent à des occultations dues à l'image à afficher ;
et
- un module d'avertissement (35, 42) configuré pour émettre (S5) un signal d'avertissement (W) si la surface d'occultation déterminée dépasse une taille admissible pour au moins l'une des surfaces partielles (K, KO1... KO5, KU1... KU3).

10. Affichage tête haute pour un moyen de transport (50), dans lequel l'affichage tête haute présente un dispositif (30, 40) selon la revendication 9 ou est configuré pour exécuter un procédé selon l'une quelconque des revendications 1 à 7 pour réduire les occultations dues à une image virtuelle (VB) de l'affichage tête haute.

11. Affichage tête haute selon la revendication 10, dans lequel le dispositif (30, 40) est disposé sur un substrat (115) de l'élément d'affichage (11).
